# EUROPÄISCHE PATENTSCHRIFT

(11) **EP 3 168 088 B1**
(45) Veröffentlichungstag und Bekanntmachung des Hinweises auf die Patenterteilung: **25.07.2018**
(21) Anmeldenummer: 16181137.7
(22) Anmeldetag: 26.07.2016
(51) Int. Cl.: B60R 21/0136, G01P 15/08

(54) **KRAFTFAHRZEUG**
MOTOR VEHICLE
VÉHICULE AUTOMOBILE

(30) Priorität: 12.11.2015 DE 102015014649
(43) Veröffentlichungstag der Anmeldung: 17.05.2017
(73) Patentinhaber: AUDI AG, 85045 Ingolstadt (DE)
(72) Erfinder: Geiss, Markus, 85051 Ingolstadt (DE)

(56) Entgegenhaltungen:
- WO-A1-87/04673
- WO-A1-2006/051107
- DE-A1- 10 230 560
- DE-A1- 10 307 745
- DE-A1-102005 013 595
- DE-A1-102005 049 780
- DE-A1-102009 000 516
- JP-A- 2010 269 709

## Beschreibung

Die Erfindung betrifft ein Kraftfahrzeug, aufweisend eine Karosserie und eine Kollisionsdetektionsvorrichtung mit wenigstens einem in wenigstens einer Detektionsrichtung messenden, an einem Einbauort der Karosserie verbauten Beschleunigungssensor und einer Auswertungseinheit zur Detektion einer Kollision bei ein Kollisionskriterium erfüllenden Sensordaten des Beschleunigungssensors.

Kollisionsdetektionsvorrichtungen in Kraftfahrzeugen dienen der frühzeitigen Detektion von Unfällen, um möglichst lange vor einer einen Insassen des Kraftfahrzeugs zu schädigenden Kollisionseinwirkung Rückhaltesysteme auszulösen. So ist es beispielsweise seit langem bekannt, im Bereich der Fahrzeugfront Beschleunigungssensoren, sogenannte Upfront-Sensoren, zu verbauen, die die bei einer Kollision auftretenden Beschleunigungen in Fahrzeuglängsrichtung als Detektionsrichtung messen. Bei Erfüllung des auf die Sensordaten angewendeten Kollisionskriteriums erzeugt die Auswertungseinheit der Kollisionsdetektionsvorrichtung dann ein die Rückhaltesysteme auslösendes Steuersignal.

Kraftfahrzeuge mit solchen Kollisionsdetektionsvorrichtungen weisen jedoch den Nachteil auf, dass die Messung durch die Beschleunigungssensoren lediglich punktuell an deren jeweiligem Einbauort erfolgt. Insbesondere bei Kollisionen mit schmalen Kollisionsobjekten in Bereichen des Kraftfahrzeugs, die von den Einbauorten der Beschleunigungssensoren entfernt gelegen sind, kann die am Einbauort mittels der Beschleunigungssensoren gemessene Beschleunigung nicht ausreichen, um das Kollisionskriterium zu erfüllen. Sind beispielsweise die Beschleunigungssensoren links und rechts an den äußeren Frontpartien der Karosserie verbaut, so kann unter Umständen eine mittig in der Fahrzeugfront erfolgende Kollision mit einem schmalen Pfahl nur eingeschränkt erfasst werden, das heißt, dass eine Unterschätzung der Kollisionsschwere bei Auswertung der Sensordaten möglich ist.

WO 2006/051107 A1 betrifft eine Aufprallsensorvorrichtung mit einem zugfesten und biegsamen Geberkörper, der sich entlang eines Sensierungsbereichs erstreckt. Der Geberkörper ist so angeordnet, dass er bei einem Aufprall eines Aufprallobjekts, der zu einer Verformung in dem Sensierungsbereich führt, korrelierend zu der Verformung bewegt wird. Die Bewegung des Geberkörpers wird über einen Sensor, der ein Beschleunigungssensor sein kann, vermessen.

DE 10 2005 049 780 A1 betrifft eine Vorrichtung zur Detektion eines Fußgängeraufpralls. Die Vorrichtung weist eine Beschleunigungssensorik auf, die hinter der Stoßfängerverkleidung angeordnet ist. Mit der Beschleunigungssensorik ist wenigstens ein Versteifungselement formschlüssig verbunden, um den Erfassungsbereich zu erweitern.

JP 2010 269709 A betrifft eine Stoßfängerstruktur, die einen Lastübertragungsstab 32 aufweist, der Last auf einen Bereich in der breiten Richtung des Kraftfahrzeugs zu einem Kollisionssensor 22 überträgt.

DE 10 2009 000 516 A1 offenbart ein Verfahren und ein Steuergerät zum Detektieren des Aufprallortes eines Objekts auf ein Fahrzeug, wobei zwei Beschleunigungssensoren unterschiedliche Richtungen im Heckbereich des Fahrzeugs vermessen. Ein Aufprallort wird unter Verwendung des ersten und zweiten Beschleunigungssignals bestimmt. Die Beschleunigungssensoren können an sehr gut kraftleitenden Fahrzeugstrukturen befestigt werden.

Der Erfindung liegt daher die Aufgabe zugrunde, ein Kraftfahrzeug mit einer wenigstens einen Beschleunigungssensor aufweisenden Kollisionsdetektionsvorrichtung anzugeben, bei dem Kollisionen auch mit schmalen Objekten über einem größeren Bereich verlässlich erfasst werden können.

Diese Aufgabe wird bei einem Kraftfahrzeug der eingangs genannten Art erfindungsgemäß durch die Merkmale des Anspruchs 1 gelöst.

Die Erfindung beruht auf der Überlegung, eine mit einer herkömmlichen Kollisionsdetektionsvorrichtung nicht oder nur unzureichend detektierbare lokale Kollision durch das mit dem Bewegungssensor bewegungsgekoppelte Kraftleitelement detektierbar zu machen, indem eine Kollisionskrafteinwirkung auf das Kraftleitelement durch Umleiten dieser Kraft eine Beschleunigung des Beschleunigungssensors bewirkt. Das Kraftleitelement ist dabei zusätzlich zur Karosserie vorgesehen, es weist also keine tragende oder stabilisierende Funktion für den Fahrzeugaufbau auf, obgleich es mechanisch mit der Karosserie verbunden sein kann. Das Kraftleitelement ist derart angeordnet, dass es eine im Kollisionsbereich einwirkende Kollisionskraft an den Beschleunigungssensor weiterleitet, so dass auf diesen eine Beschleunigung in wenigstens einer Detektionsrichtung ausgeübt wird, die jedoch nicht notwendigerweise der Detektionsrichtung entsprechen muss, mit der der Beschleunigungssensor gegebenenfalls zusätzlich zur umgeleiteten Kollisionskraft eine an seinem Einbauort einwirkende Kollisionskraft zu vermessen vermag. Dementsprechend ist das Kraftleitelement bevorzugt derart ausgelegt, dass vorgegebene Kollisionsschweren in wenigstens einem bestimmten Kollisionsbereich detektierbar sind. Das Kraftleitelement ist mithin zum Umleiten der im Kollisionsbereich einwirkenden Kollisionskraft von einer Kollision ausgebildet, die am Einbauort für sich keine das Kollisionskriterium erfüllende Kollisionsschwere aufweist. Bevorzugt ist das Kraftleitelement, wie weiter unten detailliert beschrieben, zum Umleiten von Zugkräften, die entlang des Kraftleitelements wirken, ausgebildet. Es ist aber auch denkbar, dass das Kraftleitelement zumindest abschnittsweise starr und zum Umleiten von Zug-und Schubkräften, die entlang des starren Abschnitts wirken, ausgebildet ist, beispielsweise als Strangprofil.

Das erfindungsgemäße Kraftfahrzeug ermöglicht somit eine Detektion von Kollisionen, die mit einer herkömmlichen Kollisionsdetektionsvorrichtung nicht detektiert werden würden. Insbesondere können Kollisionen mit schmalen Kollisionsobjekten, die entfernt vom Einbauort erfolgen und auf das Kraftleitelement einwirken, an den Einbauort des Beschleunigungssensors umgeleitet werden, so dass eine das Kollisionskriterium erfüllende Beschleunigung durch den Beschleunigungssensor messbar ist. Die Erfindung realisiert somit den Vorteil, dass die örtliche Erfassbarkeit von Kollisionen durch die Kollisionsdetektionsvorrichtung erweitert wird.

Es wird bei dem erfindungsgemäßen Kraftfahrzeug insbesondere bevorzugt, wenn das Kraftleitelement zum Umlenken der Kollisionskraft aus der insbesondere einer Fahrzeuglängsrichtung entsprechenden Kollisionsrichtung in eine der wenigstens einen Detektionsrichtung des Beschleunigungssensors ausgebildet ist. Das Kraftleitelement leitet dann also nicht bloß die Kollisionskraft um, sondern bewirkt eine Umlenkung der Kraft von der Kollisionsrichtung in eine Detektionsrichtung des Beschleunigungssensors. Bevorzugt entspricht die Kollisionsrichtung dabei der Fahrzeuglängsrichtung, so dass eine lokal im Kollisionsbereich erfolgende Frontalkollision, die ansonsten keine das Kollisionskriterium erfüllenden Sensordaten hervorrufen würde, am Einbauort erfasst wird. Dabei ist es selbstverständlich auch möglich, dass der Beschleunigungssensor auch zur Detektion von an seinem Einbauort einwirkenden Kollisionen aus der Kollisionsrichtung ausgebildet ist, also eine weitere, entsprechende Detektionsrichtung aufweist, und in der Detektionsrichtung die umgeleitete Kollisionskraft detektieren kann.

Bei dem mit einem zum Umlenken der Kollisionskraft ausgebildeten Kraftleit-element ist es zudem zweckmäßig, wenn die insbesondere zusätzlich zu der Fahrzeuglängsrichtung als Detektionsrichtung vorgesehene Detektionsrichtung, in die umgelenkt wird, eine Fahrzeugquerrichtung oder eine Fahrzeughochrichtung ist. Dazu wird das Kraftleitelement bevorzugt zumindest abschnittsweise entlang der vorgesehenen Detektionsrichtung, also in Fahrzeugquerrichtung oder Fahrzeughochrichtung, angeordnet, so dass bei einer Frontalkollision mit einem schmalen, pfahlartigen Kollisionsobjekt die dabei entstehende Kollisionskraft in die Fahrzeugquerrichtung umgelenkt wird. Eine Umlenkung in die Fahrzeughochrichtung wird hingegen bevorzugt, wenn ein insbesondere über die Fahrzeugbreite ausgedehntes, nahe am Fahrzeuguntergrund gelegenes Kollisionsobjekt detektiert werden soll. Um eine möglichst effiziente Detektion in der Fahrzeugquerrichtung oder der Fahrzeughochrichtung zu ermöglichen wird es bevorzugt, wenn der mit dem Kraftleitelement gekoppelte Beschleunigungssensor in der Detektionsrichtung, in die umgelenkt wird, in einem Lagermittel bewegbar gelagert ist. Beim Einwirken der Kollisionskraft auf das Kraftleitelement ist der Beschleunigungssensor somit in der vorgesehenen Detektionsrichtung beweglich und kann zur Detektion der Kollision im Lagermittel bewegt werden. Die Achse, entlang der das Lagermittel den Beschleunigungssensor lagert, entspricht insofern bevorzugt der Detektionsrichtung, in die umgelenkt wird. Es ist besonders zweckmäßig, wenn das Lagermittel zur elastischen Gegenlagerung des Beschleunigungssensors ausgebildet ist.

Es wird bei dem ein zum Umlenken der Kollisionskraft ausgebildetes Kraftleitelement aufweisenden Kraftfahrzeug bevorzugt, wenn das Kraftleitelement flexibel ausgebildet ist. Das Kraftleitelement ermöglicht dann eine besonders wirkungsvolle Kraftumlenkung, ohne seinerseits negativen Einfluss auf passive Sicherheitsmaßnahmen der Karosserie auszuüben. Bevorzugt ist das Kraftleitelement zusätzlich im Wesentlichen unelastisch ausgebildet, so dass die Kollisionskraft möglichst vollständig und ohne für ein Dehnen des Kraftleitelements aufzuwendende Kräfte den Beschleunigungssensor bewegt. Zweckmäßigerweise umfasst das Kraftleitelement wenigstens ein Band und/oder wenigstens ein Seil und/oder ist ein Netz. Es sind aber auch andere Zugmittel, beispielsweise Ketten, als Kraftleitelement denkbar. Durch ein netzartig ausgebildetes Kraftleitelement lässt sich zudem ein besonders großer Bereich zur Detektion von Kollisionen abdecken.

Bei dem erfindungsgemäßen Kraftfahrzeug kann insbesondere auch vorgesehen sein, dass die Kollisionsdetektionsvorrichtung zwei an unterschiedlichen Einbauorten verbaute Beschleunigungssensoren aufweist, die durch dasselbe Kraftleitelement bewegungsgekoppelt sind. In diesem Fall wird die Kollisionskraft an beide Beschleunigungssensoren umgeleitet oder umgelenkt. Eine solche Anordnung des Kraftleitelements bietet sich vor allem in einem Kraftfahrzeug an, in dem ohnehin zwei Bewegungssensoren zur Detektion von Kollisionen an ihren Einbauorten vorgesehen sind, so dass zur Erweiterung der örtlichen Erfassbarkeit von Kollisionen lediglich das sie bewegungskoppelnde Kraftleit-element zu ergänzen ist.

Bei einem solchen Kraftfahrzeug ist es zudem zweckmäßig, wenn die Auswertungseinheit zur Ermittlung einer den Kollisionsbereich beschreibenden Kollisionsinformation durch gemeinsame Auswertung der Sensordaten der mit demselben Kraftleitelement bewegungsgekoppelten Beschleunigungssensoren ausgebildet ist. Die auf das Kraftleitelement einwirkende Kollisionskraft erzeugt nämlich unterschiedliche Ausprägungen der Sensordaten des jeweiligen Beschleunigungssensors, was einen Rückschluss auf den Kollisionsbereich ermöglicht. Aufgrund der Kollision zu aktivierende Rückhaltesysteme des Kraftfahrzeugs können dann in Abhängigkeit der Kollisionsinformation angesteuert werden. Vorteilhafterweise kann so eine an die Kollision angepasste Schutzstrategie für die Insassen des Fahrzeugs realisiert werden.

Alternativ oder zusätzlich kann zudem vorgesehen sein, dass wenigstens zwei der wenigstens zwei mit demselben Kraftleitelement gekoppelten Beschleunigungssensoren links vorne und rechts vorne in dem Kraftfahrzeug verbaut sind, wobei sich das Kraftleitelement über die Breite des Kraftfahrzeugs zwischen den Beschleunigungssensoren erstreckt. Eine solche Anordnung von Beschleunigungssensoren, insbesondere als Upfront-Sensoren, wird derzeit schon bei einer Vielzahl von Kraftfahrzeugen realisiert, so dass sich der besondere Sicherheitseffekt der das Kraftleitelement aufweisenden Kollisionsdetektionsvorrichtung ohne erhebliche konstruktive Änderungen in bestehende Anordnungen von Beschleunigungssensoren integrieren lässt.

Bei dem erfindungsgemäßen Kraftfahrzeug ist zusätzlich vorgesehen, dass das oder ein weiteres Kraftleitelement mit einer Motorhaube des Kraftfahrzeugs bewegungsgekoppelt ist. Es lassen sich so besonders wirkungsvoll Unterfahrunfälle detektieren, bei denen die Kollision nicht im Bereich der Fahrzeugfront erfolgt, sondern knapp darüber im Bereich der Motorhaube. Durch die Bewegungskopplung des Kraftleitelements mit der Motorhaube lässt sich so die bei einem solchen Unfall einwirkende Kollisionskraft zum Bewegungssensor umleiten oder umlenken. Eine Aktivierung der Rückhaltesysteme ist dabei auch bei solchen Unfällen möglich, die mit herkömmlichen Kollisionsdetektionsvorrichtungen, insbesondere mit Upfront-Sensoren, nicht detektierbar sind.

Weitere Vorteile und Einzelheiten der Erfindung ergeben sich aus den im Folgenden beschriebenen Ausführungsbeispielen sowie anhand der Zeichnungen. Diese sind schematische Darstellungen und zeigen:
- Fig. 1: eine Prinzipskizze eines erfindungsgemäßen Kraftfahrzeugs;
- Fig. 2: eine Detailansicht eines frontseitigen Karosserieabschnitts des in Fig. 1 gezeigten Kraftfahrzeugs;
- Fig. 3: eine Detailansicht einer alternativen Ausführungsform des frontseitigen Karosserieabschnitts des in Fig. 1 gezeigten Kraftfahrzeugs; und
- Fig. 4: eine Prinzipskizze eines weiteren erfindungsgemäßen Kraftfahrzeugs.

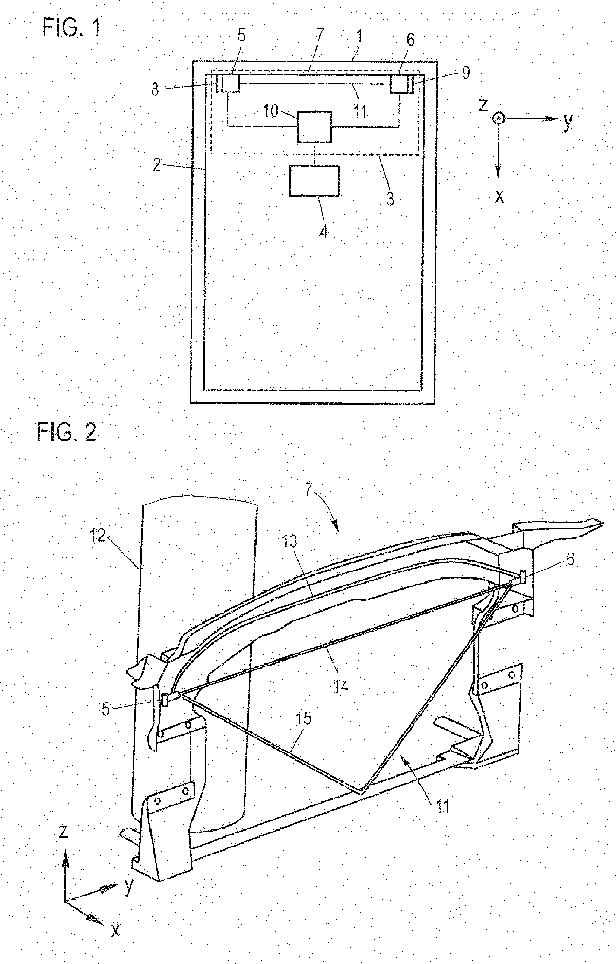

Fig. 1 zeigt eine Prinzipskizze eines Kraftfahrzeugs 1 mit einer Karosserie 2, einer Kollisionsdetektionsvorrichtung 3 und einem durch diese ansteuerbaren Rückhaltesystem 4.

Die Kollisionsdetektionsvorrichtung 3 umfasst zwei Beschleunigungssensoren 5, 6, die links vorne bzw. rechts vorne an einem Karosserieabschnitt 7 der Karosserie 2 befestigt und jeweils in einem Lagermittel 8, 9 bewegbar gelagert sind. Mittels der Beschleunigungssensoren 5, 6 entlang ihrer Detektionsrichtungen erfasste Beschleunigungen werden als Sensordaten an eine Auswertungseinheit 10 übermittelt, die auf diese zur Detektion einer Kollision ein Kollisionskriterium anwendet. Bei einem erfüllten Kollisionskriterium erzeugt die Auswertungseinheit 10 ein das Rückhaltesystem 4 auslösendes Steuersignal. Die Beschleunigungssensoren 5 und 6 sind zudem mittels eines zusätzlich vorgesehenen Kraftleitelements 11 bewegungsgekoppelt. Dieses ist kein Bestandteil der Karosserie 2, übernimmt also insbesondere keine tragende oder stabilisierende Funktion für einen Aufbau des Kraftfahrzeugs 1.

Fig. 2 ist eine Detailansicht des frontseitigen Karosserieabschnitts 7 des in Fig. 1 gezeigten Kraftfahrzeugs 1. Zudem ist ein pfahlartiges Kollisionsobjekt 12, welches bei einer Weiterfahrt des Kraftfahrzeugs 1 in einem Bereich zwischen den Beschleunigungssensoren 5 und 6 in den Karosserieabschnitt 7 einschlagen würde, gezeigt.

Die Beschleunigungssensoren 5, 6 sind zunächst in herkömmlicher Weise dazu ausgebildet, eine an ihrem Einbauort einwirkende Kollisionskraft zu erfassen, wozu sie eine erste Detektionsrichtung in x-Richtung, also in der Fahrzeuglängsrichtung, aufweisen. Eine Kollision mit dem Kollisionsobjekt 12 könnte dabei jedoch bezüglich der x-Richtung lediglich Beschleunigungen erzeugen, die beim Vermessen durch die Beschleunigungssensoren 5, 6 das Kollisionskriterium nicht erfüllende Sensordaten erzeugen. Denn der Kollisionsbereich des Kollisionsobjekts 12 umfasst keinen Einbauort der Beschleunigungssensoren 5, 6 und wird daher nur eine geringe Beschleunigung in x-Richtung auf die Beschleunigungssensoren 5, 6 ausüben.

Um diesen Nachteil zu beseitigen, weisen die Beschleunigungssensoren 5, 6 eine zweite Detektionsrichtung in y-Richtung, also in Fahrzeugquerrichtung, auf. Bei einer Kollision mit dem Kollisionsobjekt 12 wirkt eine Kollisionskraft auf das Kraftleitelement 11 lokal im Kollisionsbereich ein, welche durch das Kraftleitelement 11 zu den Beschleunigungssensoren 5, 6 in die zweite Detektionsrichtung umgeleitet wird. Das Kraftleitelement 11 umfasst dazu drei flexibel ausgebildete Bänder 13, 14, 15, welche sich als Netz über die Breite des Kraftfahrzeugs 1 zwischen den Beschleunigungssensoren 5, 6 erstrecken. Alternativ dazu ist es auch denkbar, dass anstatt Bändern 13, 14, 15 entsprechend angeordnete Seile oder Ketten, also allgemein geeignete Zugmittel, das Kraftleitelement 11 bilden. Als Folge der flexiblen Ausbildung der Bänder 13, 14, 15 bewirkt das Kraftleitelement 11 nicht nur eine bloße Umleitung der einwirkenden Kollisionskraft, sondern auch ein Umlenken der Kollisionskraft aus der x-Richtung in die y-Richtung als zweite Detektionsrichtung der Beschleunigungssensoren 5, 6. Es ist im Rahmen weiterer Ausführungsbeispiele aber auch denkbar, dass das Kraftleitelement 11 zumindest abschnittsweise starr und auch zum Umleiten von entlang des starren Abschnitts wirkenden Schubkräften ausgebildet ist. In diesem Fall kommen beispielsweise Strangprofile oder andere geeignete Schubmittel zum Einsatz.

Durch die bewegbare Lagerung der Beschleunigungssensoren 5, 6 in den Lagermitteln 8, 9 kommt es bei der Kollision somit zu einer Bewegung der Beschleunigungssensoren 5, 6 in die zweite Detektionsrichtung, wobei entsprechende Sensordaten erzeugt werden. Die Auswertungseinheit ist dazu ausgebildet, die Sensordaten der Beschleunigungssensoren 5, 6 gemeinsam auszuwerten, so dass sie in Abhängigkeit des sich bei der Kollision ergebenden Sensordatenprofils eine den Kollisionsbereich, also den Einschlagsort des Kollisionsobjekts 12, beschreibende Kollisionsinformation ermittelt. Diese Kollisionsinformation ist über das Steuersignal von der Auswertungseinheit 10 an das Rückhaltesystem 4 übertragbar, welches in Abhängigkeit der Kollisionsinformation geeignete Rückhaltemaßnahmen zum Schutz von Insassen des Kraftfahrzeugs 1 einleitet.

Durch die Ausbildung des Kraftleitelements 11 als Netz wird dabei eine besonders große Fläche des Karosserieabschnitts 7 zur Kollisionsdetektion genutzt. In weiteren Ausführungsbeispielen ist es aber auch denkbar, dass lediglich eines der Bänder 13, 14, 15 als einteiliges Kraftleitelement 11 mit den Bewegungssensoren 5, 6 bewegungsgekoppelt ist. Zudem ist es auch denkbar, anstelle des Bandes 14 eine starre Komponente des Kraftleitelements vorzusehen, welche bei einem schräg von vorne einschlagenden Kollisionsobjekt quasi als Mitnehmer diese Kollisionskraft in die zweite Detektionsrichtung umleitet. In einfacheren Ausführungsformen des Karosserieabschnitts 7 ist es zudem denkbar, dass das Kraftleitelement 11 lediglich einseitig mit einem der Beschleunigungssensoren 5, 6 bewegungsgekoppelt ist und mit seinem anderen Ende beispielsweise fest an der Karosserie 2 angeschlagen ist. Selbstverständlich übernimmt das Kraftleitelement 11 dadurch keine Karosseriefunktion und ist weiterhin zusätzlich zur Karosserie 2 vorgesehen.

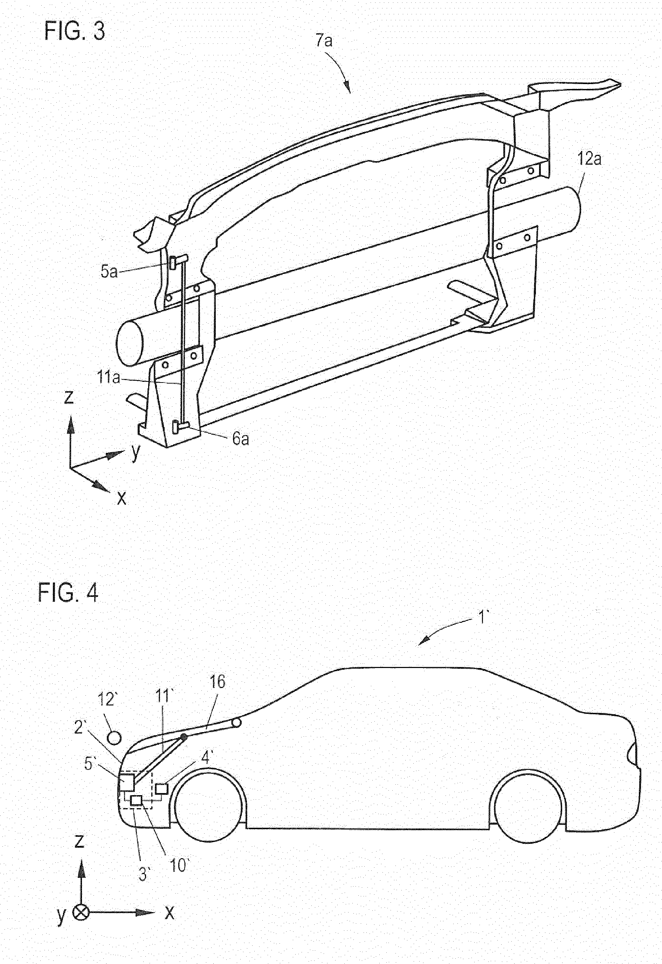

Fig. 3 zeigt eine alternative Ausführungsform eines Karosserieabschnitts 7a für das in Fig. 1 gezeigte Kraftfahrzeug 1. Dabei sind Beschleunigungssensoren 5a, 6a auf einer Seite des Karosserieabschnitts 7a in z-Richtung, also in der Fahrzeughochrichtung, angeordnet und mit einem in dieser Richtung verlaufenden Kraftleitelement 11a in Form eines Bandes bewegungsgekoppelt. Ein Kollisionsobjekt 12a erstreckt sich in diesem Fall in y-Richtung auf einer Höhe zwischen den Beschleunigungssensoren 5a, 6a, so dass auch hier eine Detektion einer Kollision mit dem Kollisionsobjekt 12a durch Auswertung einer von den Beschleunigungssensoren 5a, 6a erfassten Beschleunigung in x-Richtung das Kollisionskriterium unter Umständen nicht erfüllt. Analog zu den Fig. 2 betreffenden Ausführungen wird eine bei einer Kollision mit dem Kollisionsobjekt 12 auf das Kraftleitelement 11a einwirkende Kollisionskraft in die z-Richtung als zweite Detektionsrichtung der Beschleunigungssensoren 5a, 6a umgelenkt und erzeugt entsprechende von der Auswertungseinheit 10 zu verarbeitende Sensordaten. Selbstverständlich können die in Fig. 2 und Fig. 3 gezeigten Kraftleitelemente 11, 11a auch kombiniert in einem Karosserieabschnitt 7 vorgesehen sein, insbesondere kann ein jeweiliger Beschleunigungssensor 5, 6 bzw. 5a, 6a zur Detektion von Beschleunigungen in allen drei Detektionsrichtungen ausgebildet sein.

Fig. 4 ist eine Prinzipskizze eines weiteren Kraftfahrzeugs 1' mit einer Motorhaube 16, die an einer Karosserie 2' angelenkt ist. An dieser ist zudem ein Beschleunigungssensor 5' einer Kollisionsdetektionsvorrichtung 3' angeordnet, die außerdem eine Auswertungseinheit 10' umfasst und mit einem Rückhaltesystem 4' verbunden ist. Das Zusammenwirken der Komponenten der Kollisionsdetektionsvorrichtung 3' und des Rückhaltesystems 4' entspricht dem des in Fig. 1 gezeigten Kraftfahrzeugs 1. Im Fall des Kraftfahrzeugs 1' weist die Kollisionsdetektionsvorrichtung 3' jedoch ein Kraftleitelement 11' auf, welches mit dem Beschleunigungssensor 5' und der Motorhaube 16 bewegungsgekoppelt ist. Insbesondere im Rahmen dieses Ausführungsbeispiels bietet sich die Verwendung eines starren, also Zug- und Schubkräfte umleitenden, Kraftleitelements 11' an.

Bei einem Unterfahrunfall mit einem Kollisionsobjekt 12', welches sich in y-Richtung erstreckt und oberhalb des eine erste Detektionsrichtung in x-Richtung aufweisenden Beschleunigungssensors 5' gelegen ist, kommt es zu einem Auffalten der Motorhaube 16 das durch den Beschleunigungssensor 5' nur unzureichend erfasst werden kann und gegebenenfalls nicht zur Erfüllung des Kollisionskriteriums führt. Durch die Bewegungskopplung der Motorhaube 16 über das Kraftleitelement 11' wird die Kollisionskraft bei der Kollision mit dem Kollisionsobjekt 12' jedoch trotzdem zum Beschleunigungssensor 5' umgeleitet, so dass dieser in der Detektionsrichtung beschleunigt wird.

## Patentansprüche

1. Kraftfahrzeug (1, 1'), aufweisend eine Karosserie (2, 2') und eine Kollisionsdetektionsvorrichtung (3, 3') mit wenigstens einem in wenigstens einer Detektionsrichtung messenden, an einem Einbauort der Karosserie (2, 2') verbauten Beschleunigungssensor (5, 5a, 6, 6a, 5') und einer Auswertungseinheit (10, 10') zur Detektion einer Kollision bei ein Kollisionskriterium erfüllenden Sensordaten des Beschleunigungssensors (5, 5a, 6, 6a, 5'), wobei die Kollisionsdetektionsvorrichtung (3, 3') ein zusätzlich vorgesehenes, mit dem Beschleunigungssensor (5, 5a, 6, 6a, 5') bewegungsgekoppeltes Kraftleitelement (11, 11a, 11') aufweist, das zum Umleiten einer lokal in einem nicht den Einbauort umfassenden Kollisionsbereich einwirkenden Kollisionskraft zu dem Beschleunigungssensor (5, 5a, 6, 6a, 5') in wenigstens eine der wenigstens einen Detektionsrichtung ausgebildet ist,
**dadurch gekennzeichnet,**
**dass** das oder ein weiteres Kraftleitelement (11') mit einer Motorhaube (16) des Kraftfahrzeugs (1') bewegungsgekoppelt ist.

2. Kraftfahrzeug nach Anspruch 1,
**dadurch gekennzeichnet,**
**dass** das Kraftleitelement (11, 11a, 11') zum Umlenken der Kollisionskraft aus der insbesondere einer Fahrzeuglängsrichtung entsprechenden Kollisionsrichtung in eine der wenigstens einen Detektionsrichtung des Beschleunigungssensors (5, 5a, 6, 6a, 5') ausgebildet ist.

3. Kraftfahrzeug nach Anspruch 2,
**dadurch gekennzeichnet,**
**dass** die insbesondere zusätzlich zu der Fahrzuglängsrichtung als Detektionsrichtung vorgesehene Detektionsrichtung, in die umgelenkt wird, eine Fahrzeugquerrichtung oder Fahrzeughochrichtung ist.

4. Kraftfahrzeug nach Anspruch 3,
**dadurch gekennzeichnet,**
**dass** der mit dem Kraftleitelement (11, 11a) gekoppelte Beschleunigungssensor (5, 5a, 6, 6a, 5') in der Detektionsrichtung, in die umgelenkt wird, in einem Lagermittel (8, 9) bewegbar gelagert ist.

5. Kraftfahrzeug nach einem der Ansprüche 2 bis 4,
**dadurch gekennzeichnet,**
**dass** das Kraftleitelement (11) flexibel ausgebildet ist.

6. Kraftfahrzeug nach Anspruch 5,
**dadurch gekennzeichnet,**
**dass** das Kraftleitelement (11, 11a, 11') wenigstens ein Band (14, 15, 16) und/oder wenigstens ein Seil umfasst und/oder ein Netz ist.

7. Kraftfahrzeug nach einem der vorhergehenden Ansprüche,
**dadurch gekennzeichnet,**
**dass** die Kollisionsdetektionsvorrichtung (3) zwei an unterschiedlichen Einbauorten verbaute Beschleunigungssensoren (5, 5a, 6, 6a, 5') aufweist, die durch dasselbe Kraftleitelement (11, 11a) bewegungsgekoppelt sind.

8. Kraftfahrzeug nach Anspruch 7,
**dadurch gekennzeichnet,**
**dass** die Auswertungseinheit (10) zur Ermittlung einer den Kollisionsbereich beschreibenden Kollisionsinformation durch gemeinsame Auswertung der Sensordaten der mit demselben Kraftleitelement (11, 11a) bewegungsgekoppelten Beschleunigungssensoren (5, 5a, 6, 6a, 5') ausgebildet ist.

9. Kraftfahrzeug nach Anspruch 7 oder 8,
**dadurch gekennzeichnet,**
**dass** wenigstens zwei der wenigstens zwei mit demselben Kraftleitelement (11) gekoppelten Beschleunigungssensoren (5, 6) links vorne und rechts vorne in dem Kraftfahrzeug (1) verbaut sind, wobei sich das Kraftleitelement (11) über die Breite des Kraftfahrzeugs (1) zwischen den Beschleunigungssensoren (5, 6) erstreckt.

## Claims

1. Motor vehicle (1, 1'), having a vehicle body (2, 2') and a collision detection apparatus (3, 3') with at least one acceleration sensor (5, 5a, 6, 6a, 5') measuring in at least one detection direction, installed at one installation location of the vehicle body (2, 2') and an evaluation unit (10, 10') for detecting a collision in the case of sensor data of the acceleration sensor (5, 5a, 6, 6a, 5') fulfilling one collision criterion, wherein the collision detection apparatus (3, 3') has an additionally provided force directing element (11, 11a, 11') motion-coupled with the acceleration sensor (5, 5a, 6, 6a, 5') which is designed for redirecting a collision force, impacting locally in a collision area which does not comprise the installation site, to the acceleration sensor (5, 5a, 6, 6a, 5') in at least one of the at least one detection direction, **characterised in that** the or a further force directing element (11') is motion-coupled with an engine cover (16) of the motor vehicle (1').

2. Motor vehicle according to claim 1, **characterised in that** the force directing element (11, 11a, 11') is designed to divert the collision force from the collision direction in particular being equal to a vehicle longitudinal direction into one of the at least one detection direction of the acceleration sensor (5, 5a, 6, 6a, 5').

3. Motor vehicle according to claim 2, **characterised in that** the detection direction, provided in particular additionally to the vehicle longitudinal direction as detection direction, in which diversion occurs, is a vehicle transverse direction or vehicle vertical direction.

4. Motor vehicle according to claim 3, **characterised in that** the acceleration sensor (5, 5a, 6, 6a, 5') coupled with the force directing element (11, 11a) is mounted in a mounting means (8, 9) movably in the detection direction in which diversion occurs.

5. Motor vehicle according to one of claims 2 to 4, **characterised in that** the force directing element (11) is flexibly designed.

6. Motor vehicle according to claim 5, **characterised in that** the force directing element (11, 11a, 11) comprises at least one tape (14, 15, 16) and/or at least one rope and/or is a mesh.

7. Motor vehicle according to one of the preceding claims, **characterised in that** the collision detection apparatus (3) has two acceleration sensors (5, 5a, 6, 6a, 5') installed at differing installation sites which are motion-coupled by means of the same force directing element (11, 11a).

8. Motor vehicle according to claim 7, **characterised in that** the evaluation unit (10) is designed to determine one of the items of collision information describing the collision area by means of shared evaluation of the sensor data from the acceleration sensors (5, 5a, 6, 6a, 5') motion-coupled with the same force directing element (11, 11a).

9. Motor vehicle according to claim 7 or 8, **characterised in that** at least two of the at least two acceleration sensors (5, 6) coupled with the same force directing element (11) are installed front left and front right in the motor vehicle (1), wherein the force directing element (11) extends across the width of the motor vehicle (1) between the acceleration sensors (5, 6).

## Revendications

1. Véhicule automobile (1, 1'), présentant une carrosserie (2, 2') et un dispositif de détection de collision (3, 3') avec au moins un capteur d'accélération (5, 5a, 6, 6a, 5') réalisant des mesures dans au moins une direction de détection, monté en un emplacement de montage de la carrosserie (2, 2') et une unité d'analyse (10, 10') servant à détecter une collision dans le cas de données de capteur, remplissant un critère de collision, du capteur d'accélération (5, 5a, 6, 6a, 5'), dans lequel le dispositif de détection de collision (3, 3') présente un élément de guidage de force (11, 11a, 11') prévu en supplément, couplé en déplacement au capteur d'accélération (5, 5a, 6, 6a, 5'), qui est réalisé pour dévier une force de collision agissant localement dans une zone de collision ne comprenant pas l'emplacement de montage vers le capteur de détection (5, 5a, 6, 6a, 5') dans au moins une de l'au moins une direction de détection,
**caractérisé en ce**
**que** l'élément de guidage de force (11') ou un autre élément de guidage de force est couplé en déplacement à un capot de moteur (16) du véhicule automobile (1').

2. Véhicule automobile selon la revendication 1,
**caractérisé en ce**
**que** l'élément de guidage de force (11, 11a, 11') est réalisé pour dévier la force de collision provenant de la direction de collision correspondant à un sens longitudinal de véhicule dans une de l'au moins une direction de détection du capteur d'accélération (5, 5a, 6, 6a, 5').

3. Véhicule automobile selon la revendication 2,
**caractérisé en ce**
**que** la direction de détection prévue en particulier en plus du sens longitudinal de véhicule en tant que direction de détection, dans laquelle la déviation est réalisée, est un sens transversal de véhicule ou un sens vertical de véhicule.

4. Véhicule automobile selon la revendication 3,
**caractérisé en ce**
**que** le capteur d'accélération (5, 5a, 6, 6a, 5') couplé à l'élément de guidage de force (11, 11a) est monté de manière à pouvoir être déplacé dans un moyen formant palier (8, 9) dans la direction de détection, dans laquelle la déviation est réalisée.

5. Véhicule automobile selon l'une quelconque des revendications 2 à 4,
**caractérisé en ce**
**que** l'élément de guidage de force (11) est réalisé de manière flexible.

6. Véhicule automobile selon la revendication 5,
**caractérisé en ce**
**que** l'élément de guidage de force (11, 11a, 11') est au moins une bande (14, 15, 16) et/ou au moins une corde et/ou un filet.

7. Véhicule automobile selon l'une quelconque des revendications précédentes,
**caractérisé en ce**
**que** le dispositif de détection de collision (3) présente deux capteurs d'accélération (5, 5a, 6, 6a, 5') montés au niveau de différents emplacements de montage, qui sont couplés en déplacement par le même élément de guidage de force (11, 11a).

8. Véhicule automobile selon la revendication 7,
**caractérisé en ce**
**que** l'unité d'analyse (10) est réalisée pour déterminer une information de collision décrivant la zone de collision par une analyse commune des données de capteur des capteurs d'accélération (5, 5a, 6, 6a, 5') couplés en déplacement au même élément de guidage de force (11, 11a).

9. Véhicule automobile selon la revendication 7 ou 8,
**caractérisé en ce**
**qu'**au moins deux des au moins deux capteurs d'accélération (5, 6) couplés au même élément de guidage de force (11) sont montés à l'avant à gauche et à l'avant à droite dans le véhicule automobile (1), dans lequel l'élément de guidage de force (11) s'étend sur la largeur du véhicule automobile (1) entre les capteurs d'accélération (5, 6).
